# EUROPÄISCHE PATENTSCHRIFT

(11) **EP 3 446 764 B1**
(45) Veröffentlichungstag und Bekanntmachung des Hinweises auf die Patenterteilung: **20.11.2019**
(21) Anmeldenummer: 18000608.2
(22) Anmeldetag: 18.07.2018
(51) Int. Cl.: B01D 3/26, B01D 3/30, B01F 7/00, B04B 5/06, B01F 3/04, B01D 3/08, B01J 19/32, B01J 19/18, B01J 19/28

(54) **STOFFAUSTAUSCHMASCHINE**
MATERIAL EXCHANGE MACHINE
MACHINE D'ÉCHANGE DE MATIÈRE

(30) Priorität: 23.08.2017 DE 102017007861
(43) Veröffentlichungstag der Anmeldung: 27.02.2019
(73) Patentinhaber: JULIUS MONTZ GmbH, D-40723 Hilden (DE)
(72) Erfinder: Schulz, Robin, 59174 Kamen (DE); Zich, Egon, 42799 Leichlingen (DE); Jansen, Helmut, 41542 Dormagen (DE); Hugen, Thorsten Erik Alexander, 45239 Essen (DE)
(74) Vertreter: Cohausz Hannig Borkowski Wißgott

(56) Entgegenhaltungen:
- EP-A1- 0 089 128
- GB-A- 265 120
- GB-A- 757 149
- US-A- 5 363 909

## Beschreibung

Die Erfindung betrifft eine Vorrichtung zum Bewirken eines Stoffaustausches zwischen einer Flüssigkeit und einem Gas innerhalb eines eine Packung aufweisenden Rotors, wobei die Flüssigkeit im Zentrum des Rotors aufgegeben und durch die von der Rotordrehung erzeugte Zentrifugalkraft durch die Packung hindurch nach außen getrieben wird, und wobei das Gas den Rotor umgibt und durch den Gasdruck durch den Rotor hindurch von außen nach innen gedrückt wird, entgegen der Flüssigkeitsströmung im Rotor.

Aus der WO 2015/101826 A1 und WO 2016/038480 A1 sind Stoffaustauschmaschinen bekannt mit einem Rotor, der zwei Seitenflächen aufweist, wobei im Zwischenraum zwischen den beiden Flächen sich eine Packung befindet, die bei Rotordrehung zentral aufgegebene Flüssigkeit nach außen treibt. Hierbei ist der Rotor von einem Gas umgeben, das durch den Gasdruck entgegen der Flüssigkeit durch den Rotor strömt, um einen Stoffaustausch zwischen der Flüssigkeit und dem Gas zu bewirken.

US 5 363 909 A und GB 757149 A veröffentlichen auch Vorrichtungen zum Bewirken eines Stoffaustausches zwischen einer Flüssigkeit und einem Gas innerhalb eines eine Packung aufweisenden Rotors.

Aufgabe der Erfindung ist es, eine Vorrichtung der eingangs genannten Art zu schaffen, bei der der Stoffaustausch und der Stofftransport wesentlich verbessert ist und die Betriebszeiten verringert sind. Zudem soll die Vorrichtung einfach in der Herstellung, Montage und Anwendungen sein.

Diese Aufgaben werden erfindungsgemäß dadurch gelöst, dass die im Rotor befindliche Packung in einzelne Packungssektoren aufgeteilt ist, die zusammen eine Kreisscheibe bilden, wobei jeder ringsektorförmige Packungssektor von mindestens einer Strukturpackung gebildet ist, die aus mehreren gewebe-, gestrick-, sieb- oder gitterförmigen, übereinanderliegenden Strukturflächen aus Metall insbesondere Blechbändern oder Kunststoff oder Glasfasern bestehen, zu denen die Drehachse des Rotors lotrecht steht.

Das Aufteilen der im Rotor befindlichen Packung in einzelne Packungssektoren mit einer gewebe-, gestrick-, sieb- oder gitterförmigen Struktur führt zu einer wesentlichen Verbesserung des Stoffaustausches und des Transports bei kürzeren Betriebszeiten. Auch ist das Zusammensetzen eines solchen Rotors aus einzelnen Packungssektoren, die wiederum aus einzelnen Strukturflächen zusammengesetzt sind, besonders einfach in der Herstellung und führen zudem zu dem Vorteil, dass die Strukturpackungen in ihrer Struktur und den Arten und Abmessungen der Strukturfläche sehr genau an die jeweiligen Anforderungen angepasst werden können.

Hierbei ist besonders vorteilhaft, wenn die Strukturflächen wellenförmig sind, wobei die Wellen jeder Strukturfläche zueinander parallel liegen. Auch hat sich als vorteilhaft in der Wirkung und Herstellung herausgestellt, wenn die Wellen der Strukturfläche im Querschnitt zick-zack-förmig sind. Hierzu wird auch vorgeschlagen, dass die Wellen einer Strukturfläche zu den Wellen einer benachbarten Strukturfläche schräg insbesondere rechtwinklig angeordnet sind, so dass zwischen zwei Strukturflächen sich kreuzende Strömungskanäle bestehen.

Vorzugweise wird vorgeschlagen, dass die Strukturflächen aus Metall- und/oder Kunststoffdrähten oder Blechbändern oder Glasfasern bestehen. Hierbei können die Metall- und/oder Kunststoffdrähte einen Durchmesser von 0,1 bis 0,5 vorzugsweise von 0,15 bis 0,2 mm aufweisen.

Von Vorteil ist, wenn die im Rotor befindliche Strukturpackung aus 2 bis 64 vorzugsweise 4 bis 16 Packungssektoren zusammengesetzt ist. Konstruktiv wird vorgeschlagen, dass die inneren Enden der Packungssektoren einen inneren, zylindrischen, koaxialen Ringraum bilden, von dem Strömungskanäle ausgehen und in den die Flüssigkeit aufgegeben wird. Auch wird hierzu vorgeschlagen, dass die äußeren Enden der Packungssektoren einen äußeren zylindrischen Ring bilden, in dem die Strömungskanäle der Packungssektoren enden.

Als besonders vorteilhaft hat sich herausgestellt, wenn die Packungssektoren aus drei bis zehn vorzugsweise fünf bis acht übereinanderliegenden Strukturflächen zusammengesetzt sind. Auch können die Strukturflächen eines Packungssektors insbesondere durch Laserstrahlen aneinander punktgeschweißt sein.

Das Herstellen im Durchmesser größerer Rotoren wird vereinfacht, wenn die Strukturpackung des Rotors aus zueinander koaxialen Strukturpackungsringen besteht, die in einzelne Ringsektoren aufgeteilt sind. Auch wird vorgeschlagen, dass der Rotor zwei kreisrunde Seitenflächen aufweist, zu denen die Rotorendrehachse lotrecht ist und die miteinander einen Zwischenraum bilden, der von den Packungssektoren ausgefüllt ist.

Vorteilhafte Ausgestaltungen der Erfindung sind in den Zeichnungen dargestellt und werden im Folgenden näher beschrieben. Es zeigen
- Fig. 1: einen Querschnitt durch den Rotor der erfindungsgemäßen Stoffaustauschmaschine,
- Fig. 2: eine perspektivische Darstellung eines aus Strukturflächen zusammengesetzten Packungssektors,
- Fig. 3: eine Draufsicht auf eine Strukturfläche,
- Fig. 4: einen Schnitt nach IV-IV durch die Strukturfläche nach Fig. 3,
- Fig. 5 und 6: Schnitte durch Rotoren mit Strukturpackungsringen aus einzelnen Ringsektoren.

Die Stoffaustauschmaschine weist einen Rotor 1 auf mit zwei koaxialen kreisrunden Seitenflächen 2, die zueinander parallel angeordnet sind und deren Zwischenraum durch eine Packung ausgefüllt ist. Hierbei besteht die Packung aus einzelnen Packungssektoren 3 in Form von Kreisringsektoren, so dass die inneren Enden der Packungssektoren 3 einen inneren zylindrischen, koaxialen bzw. zylindrischen Ringraum 4 bilden, in dem die Flüssigkeit aufgegeben wird. Die äußeren gebogenen Enden der Packungssektoren bilden einen äußeren zylindrischen Ring 5, in dem Strömungskanäle 6 der Packungssektoren enden.

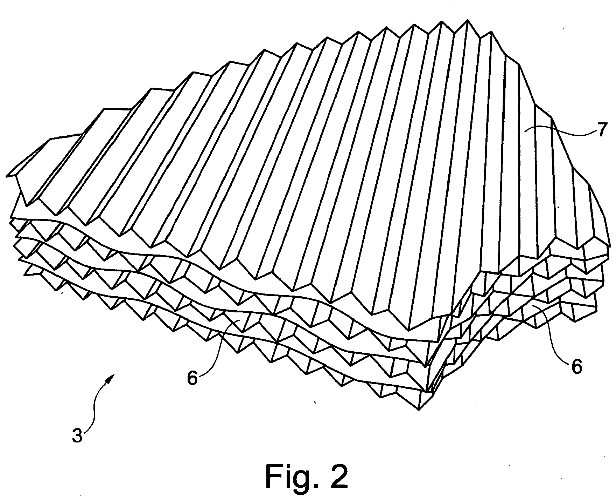

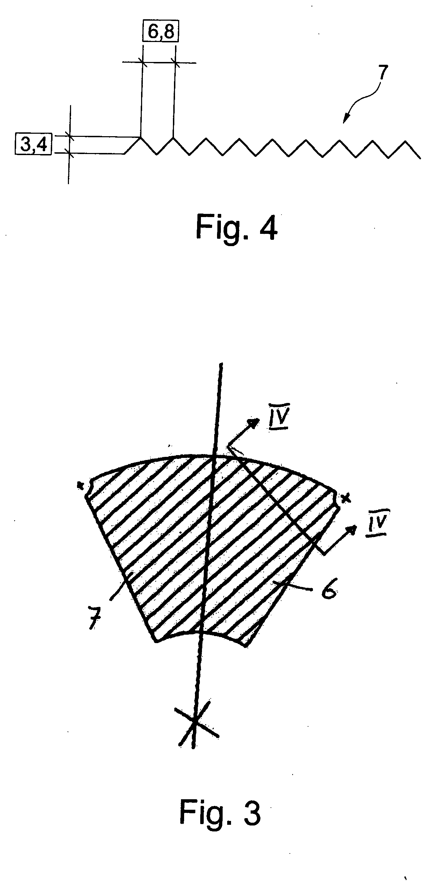

Wie in Fig. 2 dargestellt, ist jeder Packungssektor 3 aus einzelnen, übereinanderliegenden Strukturflächen 7 ausgebaut, wobei die Strukturflächen 7 wellenförmig ausgebildet sind. Hierbei können die Wellen derart gestaltet sein, dass sie im Querschnitt zick-zack-förmig sind, wie in Fig. 4 dargestellt oder aber aus gerundeten Wellen bestehen.

Die zueinander parallelen Wellen jeder Strukturfläche 7 bilden in deren Täler die Strömungskanäle 6, wobei aneinander anliegende Strukturflächen zueinander derart verdreht und damit schräg insbesondere rechtwinklig zueinander angeordnet sind, dass zwischen zwei Strukturflächen die Strömungskanäle einander kreuzen, wie dies aus Fig. 2 zu ersehen ist.

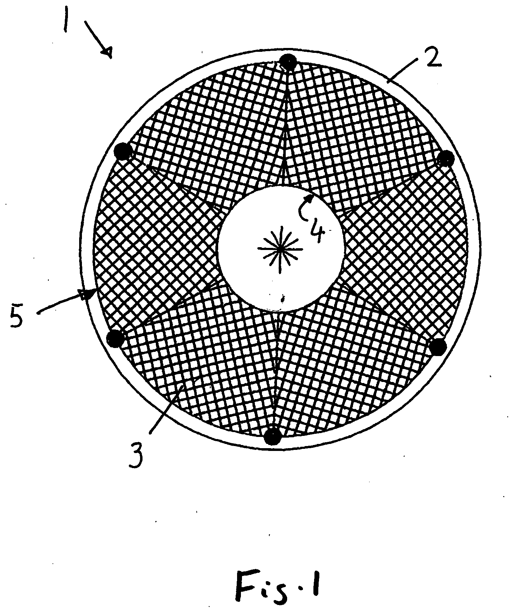

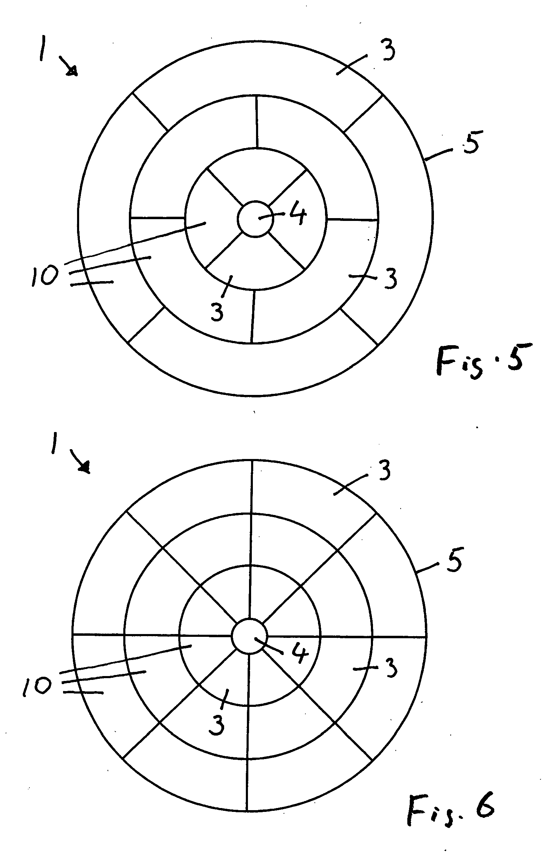

Vorzugsweise sind die Packungssektoren jeweils aus drei bis hundertfünfzig vorzugsweise fünf bis fünfundzwanzig übereinanderliegenden Strukturflächen zusammengesetzt. Ferner ist die im Rotor befindliche Strukturpackung aus zwei bis vierundsechzig Packungssektoren zusammengesetzt, wie dies Fig. 1 zeigt. Alternativ kann die Strukturpackung des Rotors aber auch aus zueinander koaxialen Strukturpackungsringen bestehen, die wiederum in einzelne Ringsektoren aufgeteilt sind, wie dies die Fig. 5 und 6 zeigen.

Die Strukturflächen 7 bestehen entweder aus einem Band, Gewebe oder Gestrick in Vollmetall und/oder Kunststoffdrähten oder Glasfasern, wobei die Drähte vorzugsweise einen Durchmesser von 0,1 bis 0,5 mm vorzugsweise von 0,15 bis 0,2 mm Durchmesser aufweisen. Alternativ können die Strukturflächen 7 aber auch von einem Sieb oder Gitter aus Metall oder Kunststoff gebildet sein.

Die Strukturflächen 7 eines Packungssektors 3 sind vorzugsweise durch Laserstrahlen aneinander punktgeschweißt.

## Patentansprüche

1. Vorrichtung zum Bewirken eines Stoffaustausches zwischen einer Flüssigkeit und einem Gas innerhalb eines eine Packung aufweisenden Rotors (1), wobei die Flüssigkeit im Zentrum des Rotors aufgegeben und durch die von der Rotordrehung erzeugte Zentrifugalkraft durch die Packung hindurch nach außen getrieben wird, und wobei das Gas den Rotor umgibt und durch den Gasdruck durch den Rotor hindurch von außen nach innen gedrückt wird, entgegen der Flüssigkeitsströmung im Rotor, **dadurch gekennzeichnet, dass** die im Rotor (1) befindliche Packung in einzelne Packungssektoren (3) aufgeteilt ist, die zusammen eine Kreisscheibe bilden, wobei jeder ringsektorförmige Packungssektor (3) von mindestens einer Strukturpackung gebildet ist, die aus mehreren gewebe-, gestrick-, sieb- oder gitterförmigen, übereinanderliegenden Strukturflächen (7) aus Metall insbesondere Blechbändern oder Kunststoff oder Glasfasern bestehen, zu denen die Drehachse des Rotors lotrecht steht.

2. Vorrichtung nach Anspruch 1, **dadurch gekennzeichnet, dass** die Strukturflächen (7) wellenförmig sind, wobei die Wellen jeder Strukturfläche zueinander parallel liegen.

3. Vorrichtung nach Anspruch 2, **dadurch gekennzeichnet, dass** die Wellen der Strukturfläche im Querschnitt zick-zack-förmig sind.

4. Vorrichtung nach Anspruch 2 oder 3, **dadurch gekennzeichnet, dass** die Wellen einer Strukturfläche (7) zu den Wellen einer benachbarten Strukturfläche schräg insbesondere rechtwinklig angeordnet sind, so dass zwischen zwei Strukturflächen sich kreuzende Strömungskanäle bestehen.

5. Vorrichtung nach einem der vorherigen Ansprüche, **dadurch gekennzeichnet, dass** die Strukturflächen (7) aus Metall- und/oder Kunststoffdrähten oder Blechbändern oder Glasfasern bestehen.

6. Vorrichtung nach Anspruch 5, **dadurch gekennzeichnet, dass** die Metall- und/oder Kunststoffdrähte einen Durchmesser von 0,1 bis 0,5 vorzugsweise von 0,15 bis 0,2 mm aufweisen.

7. Vorrichtung nach einem der vorherigen Ansprüche, **dadurch gekennzeichnet, dass** die im Rotor befindliche Strukturpackung aus 2 bis 64 Packungssektoren (3) zusammengesetzt ist.

8. Vorrichtung nach einem der vorherigen Ansprüche, **dadurch gekennzeichnet, dass** die inneren Enden der Packungssektoren (3) einen inneren zylindrischen koaxialen Ringraum (4) bilden, von dem Strömungskanäle ausgehen und in den die Flüssigkeit aufgegeben wird.

9. Vorrichtung nach einem der vorherigen Ansprüche, **dadurch gekennzeichnet, dass** die äußeren Enden der Packungssektoren (3) einen äußeren zylindrischen Ring (5) bilden, in dem die Strömungskanäle (6) der Packungssektoren enden.

10. Vorrichtung nach einem der vorherigen Ansprüche, **dadurch gekennzeichnet, dass** die Packungssektoren (3) aus drei bis hundertfünfzig vorzugsweise fünf bis fünfundzwanzig übereinanderliegenden Strukturflächen (7) zusammengesetzt ist.

11. Vorrichtung nach einem der vorherigen Ansprüche, **dadurch gekennzeichnet, dass** die Strukturflächen eines Packungssektors (3) insbesondere durch Laserstrahlen aneinander punktgeschweißt sind.

12. Vorrichtung nach einem der vorherigen Ansprüche, **dadurch gekennzeichnet, dass** die Strukturpackung des Rotors (1) aus zueinander koaxialen Strukturpackungsringen (10) besteht, die in einzelne Ringsektoren (3) aufgeteilt sind.

13. Vorrichtung nach einem der vorherigen Ansprüche, **dadurch gekennzeichnet, dass** der Rotor zwei kreisrunde Seitenflächen (2) aufweist, zu denen die Rotorendrehachse lotrecht ist und die miteinander einen Zwischenraum bilden, der von den Packungssektoren (3) ausgefüllt ist.

## Claims

1. Device for bringing about a material exchange between a liquid and a gas within a rotor (1) having a packing, wherein the liquid is introduced in the centre of the rotor and is forced outwards, through the packing, by the centrifugal force generated by the rotation of the rotor, and wherein the gas surrounds the rotor and is pushed inwards from the outside, through the rotor, by the gas pressure, counter to the flow of liquid in the rotor, **characterized in that** the packing located in the rotor (1) is divided into individual packing sectors (3) which together form a circular disk, wherein each packing sector (3), which is in the shape of a sector of a ring, is formed of at least one structured packing which consists of multiple woven, knitted, screen- or grid-shaped superposed structured surfaces (7) made of metal, in particular metal strips, or plastic or glass fibres to which the axis of rotation of the rotor is perpendicular.

2. Device according to Claim 1, **characterized in that** the structured surfaces (7) are corrugated, the corrugations of each structured surface being parallel to one another.

3. Device according to Claim 2, **characterized in that** the corrugations of the structured surface have a zigzag cross section.

4. Device according to Claim 2 or 3, **characterized in that** the corrugations of a structured surface (7) are arranged at an angle, in particular a right angle, to the corrugations of an adjacent structured surface so as to create intersecting flow ducts between two structured surfaces.

5. Device according to one of the preceding claims, **characterized in that** the structured surfaces (7) are made of metal wire and/or plastic wire or metal strips or glass fibres.

6. Device according to Claim 5, **characterized in that** the metal wires and/or plastic wires have a diameter of 0.1 to 0.5, preferably from 0.15 to 0.2 mm.

7. Device according to one of the preceding claims, **characterized in that** the structured packing in the rotor is made up of 2 to 64 packing sectors (3).

8. Device according to one of the preceding claims, **characterized in that** the inner ends of the packing sectors (3) form an inner cylindrical coaxial annular space (4) from which flow ducts part and into which the liquid is introduced.

9. Device according to one of the preceding claims, **characterized in that** the outer ends of the packing sectors (3) form an outer cylindrical ring (5) in which the flow ducts (6) of the packing sectors end.

10. Device according to one of the preceding claims, **characterized in that** the packing sectors (3) are made up of three to one hundred and fifty, preferably five to twenty-five superposed structured surfaces (7).

11. Device according to one of the preceding claims, **characterized in that** the structured surfaces of a packing sector (3) are spot welded to one another, in particular using laser beams.

12. Device according to one of the preceding claims, **characterized in that** the structured packing of the rotor (1) consists of mutually coaxial structured packing rings (10) which are divided into individual ring sectors (3).

13. Device according to one of the preceding claims, **characterized in that** the rotor has two circular side faces (2) to which the axis of rotation of the rotor is perpendicular and which together form an interspace which is filled with the packing sectors (3).

## Revendications

1. Dispositif permettant de provoquer un échange de matière entre un liquide et un gaz à l'intérieur d'un rotor (1) comprenant un garnissage, dans lequel le liquide est introduit au centre du rotor et est entraîné vers l'extérieur à travers le garnissage par la force centrifuge produite par la rotation du rotor, et dans lequel le gaz entoure le rotor et est poussé de l'extérieur vers l'intérieur à travers le rotor par la pression de gaz, en sens inverse à l'écoulement de liquide dans le rotor, **caractérisé en ce que** le garnissage situé dans le rotor (1) est divisé en secteurs de garnissage (3) individuels qui forment conjointement un disque circulaire, chaque secteur de garnissage (3) en forme de secteur annulaire étant formé par au moins un garnissage structuré qui est constitué de plusieurs surfaces structurées (7) superposées en forme de tissu, de tricotage, de tamis ou de grille et constituées de métal, en particulier de bandes de tôle, ou de matière synthétique ou de fibres de verre, auxquelles l'axe de rotation du rotor est perpendiculaire.

2. Dispositif selon la revendication 1, **caractérisé en ce que** les surfaces structurées (7) sont ondulées, les ondulations de chaque surface structurée s'étendant parallèlement les unes aux autres.

3. Dispositif selon la revendication 2, **caractérisé en ce que** les ondulations de la surface structurée sont en forme de zigzag en section transversale.

4. Dispositif selon la revendication 2 ou 3, **caractérisé en ce que** les ondulations d'une surface structurée (7) sont disposées de manière inclinée, en particulier de manière perpendiculaire, par rapport aux ondulations d'une surface structurée adjacente, de telle sorte que des canaux d'écoulement se croisant existent entre deux surfaces structurées.

5. Dispositif selon l'une des revendications précédentes, **caractérisé en ce que** les surfaces structurées (7) sont constituées de fils de métal et/ou de matière synthétique ou de bandes de tôle ou de fibres de verre.

6. Dispositif selon la revendication 5, **caractérisé en ce que** les fils de métal et/ou de matière synthétique présentent un diamètre de 0,1 à 0,5, de préférence de 0,15 à 0,2 mm.

7. Dispositif selon l'une des revendications précédentes, **caractérisé en ce que** le garnissage structuré situé dans le rotor est composé de 2 à 64 secteurs de garnissage (3).

8. Dispositif selon l'une des revendications précédentes, **caractérisé en ce que** les extrémités intérieures des secteurs de garnissage (3) forment un espace annulaire (4) coaxial cylindrique intérieur, duquel partent des canaux d'écoulement et dans lequel le liquide est introduit.

9. Dispositif selon l'une des revendications précédentes, **caractérisé en ce que** les extrémités extérieures des secteurs de garnissage (3) forment un anneau (5) cylindrique extérieur dans lequel les canaux d'écoulement (6) des secteurs de garnissage se terminent.

10. Dispositif selon l'une des revendications précédentes, **caractérisé en ce que** les secteurs de garnissage (3) sont composés de trois à cent cinquante, de préférence de cinq à vingt-cinq surfaces structurées (7) superposées.

11. Dispositif selon l'une des revendications précédentes, **caractérisé en ce que** les surfaces structurées d'un secteur de garnissage (3) sont soudées par points les unes aux autres en particulier par des faisceaux laser.

12. Dispositif selon l'une des revendications précédentes, **caractérisé en ce que** le garnissage structuré du rotor (1) est constitué d'anneaux de garnissage structuré (10) coaxiaux les uns aux autres, lesquels sont divisées en secteurs annulaires (3) individuels.

13. Dispositif selon l'une des revendications précédentes, **caractérisé en ce que** le rotor comprend deux surfaces latérales (2) circulaires auxquelles l'axe de rotation de rotor est perpendiculaire et lesquelles forment conjointement un espace intermédiaire qui est rempli par les secteurs de garnissage (3).
